# EUROPEAN PATENT SPECIFICATION

(11) **EP 3 569 936 B1**
(45) Date of publication and mention of the grant of the patent: **02.12.2020**
(21) Application number: 19173756.8
(22) Date of filing: 10.05.2019
(51) Int. Cl.: F24D 10/00, F24D 17/00, F24D 17/02, F24D 19/10

(54) **DOMESTIC WATER RE-HEATING**
BRAUCHWASSERWIEDERERWÄRMUNG
RÉCHAUFFAGE DE L'EAU DOMESTIQUE

(30) Priority: 17.05.2018 DK PA201800218
(43) Date of publication of application: 20.11.2019
(73) Proprietor: Danfoss A/S, 6430 Nordborg (DK)
(72) Inventor: THORSEN, Jan Eric, 6430 Nordborg (DK)
(74) Representative: Stevens, Brian

(56) References cited:
- WO-A2-2006/111755
- WO-A2-2011/023193
- WO-A2-2011/105881
- DE-A1-102008 014 204
- DE-A1-102008 020 637

## Description

### BACKGROUND

In relation to providing domestic hot water (DHW) services, a DHW circulation system is typically applied for ensuring high comfort by short waiting time for DHW after a tap is opened.

The energy for heating the DHW and DHW circulation can come from district heating (DH), solar system, or other heat supplying systems.

One important parameter for efficient operation of DH systems is the DH return temperature level. The lower the return temperature, the lower is the thermal distribution loss, the higher is the energy source efficiency, the more sources become available and the higher is the thermal capacity of the DH network. Thus, a low DH temperature is to be preferred.

The DHW circulation temperature is typically 55°C in forward flow and 50°C in return flow, but could be any suitable temperatures.

In case the needed energy for heating the DHW circulation is transferred by a heat exchanger, the DH return temperature would be above 50°C, which is considered high.

In case the needed energy for heating the DHW circulation is taken from a DHW tank, the DH return temperature from the tank would be high.

Prior art for heating systems comprising domestic hot water lines feeding water taps and recirculation lines are known from documents WO 2006/111755 A2, DE 10 2008 014204 A1 or DE 10 2008 020637 A1.

The object therefore is to provide a system that enables a lower DH return temperature, and optionally DH supply temperature, but still enables a cheap and energy efficient hating of the domestic water for the tapping.

### SUMMARY OF THE INVENTION

The objects are solved according to the system as indicated in the claim 1.

According to the invention the second fluid connection is connected to a domestic return communication of the domestic hot water line and includes an inlet connected to a return part of said domestic hot water line being downstream of the first of the water taps, and a second connection outlet connected to a supply part of said domestic hot water line being upstream of the first of the water taps by a domestic return communication, together forming a flow circuit where thermal energy in the thermal transfer unit is transferred to the water from the return part and then directed to the supply part.

In an embodiment a pumping unit is connected to the domestic return communication, which may be either connected between the inlet connected to a return part or outlet connected to a supply part.

In an embodiment a reservoir or heat exchanger is connected as water supply to the domestic heating line, this being heated by the supply. The reservoir or heat exchanger in an embodiment is positioned upstream of the first tap connected domestic hot water line (or upstream of the supply part) and downstream of the to the domestic return communication (or the return part).

According to the invention the first connection of thermal transfer unit includes an inlet connected to a supply line of the supply by a heating inlet communication, and an outlet connected to a return line of the supply by a heating outlet communication.

In an embodiment a first interconnecting line connects the heating inlet communication and the heating outlet communication, and where and check valve and a pumping unit is connected to circulate fluid from the first fluid communication outlet to the first inlet through the first interconnecting line.

In an embodiment a heat exchanger is positioned with a first path forming part of the heating inlet communication and a second path forming part of the domestic return communication, thus transferring thermal energy from the hotter to the colder of the respective fluids.

In an embodiment the first interconnecting line is connected to the heating inlet communication in the path between the heat exchanger and the thermal transfer unit first fluid communication inlet.

In an embodiment a first flow controlling valve (or pump) is positioned to control the flow rate in the circulating fluid from the first fluid communication outlet to inlet through the first interconnecting line.

In an embodiment a second interconnecting line connects the return line to the flow path between the heat exchanger and the thermal transfer unit and optionally is equipped with a second flow controlling valve.

In an embodiment a third interconnecting line connects the heating inlet communication to the return line or the heating inlet communication, and optionally is equipped with a third flow controlling valve.

In an embodiment a second heat exchanger having a first side connected to respectively the supply line and return line or two positions of the return line.

In an embodiment a heat exchanger is positioned with a first path connected to the supply line by a heat exchanger inlet line and to the heating outlet communication through a heat exchanger outlet line, and where a second path of the heat exchanger forms part of the domestic return communication, thus transferring thermal energy from the hotter to the colder of the respective fluids.

In an embodiment a heat exchanger is positioned with a first path forming part of the heating inlet communication and a second path forming part of the domestic return communication, thus transferring thermal energy from the hotter to the colder of the respective fluids, where the first connection of said thermal transfer unit includes an inlet connected to the outlet of the first path and a first connection outlet connected to a return line of the supply by a heating outlet communication, and where the outlet of the second path is connected to the second connection inlet.

In an embodiment the domestic return communication is directly connected to a hot section of a reservoir that is connected as water supply to the domestic heating line, this being heated by the supply.

In an embodiment the heat transfer unit is directly connected to the reservoir by an extraction line connected at a cold or mid-section of the reservoir branching to connect to respectively the first connection inlet (and second connection inlet of said heat transfer unit.

According to the invention the thermal transfer unit is a heat pump.

In an embodiment the temperature of the first connection inlet is lower than the temperature of the second connection inlet.

According to the invention the temperature of the first connection outlet is lower than the temperature of the second connection outlet.

### FIGURES

- Fig. 1: A first embodiment of the heating circuit according to the present invention including a thermal transfer unit connected to the domestic hot water line.
- Fig. 2: A second embodiment of the heating circuit according to the present invention including a thermal transfer unit connected to the domestic hot water line and a first interconnecting line.
- Fig. 3: A third embodiment of the heating circuit according to the present invention including a thermal transfer unit connected to the domestic hot water line and a heat exchanger.
- Fig. 4: A fourth embodiment of the heating circuit according to the present invention including a thermal transfer unit connected to the domestic hot water line and a heat exchanger and first interconnecting line
- Fig. 5: A fifth embodiment of the heating circuit according to the present invention including a thermal transfer unit connected to the domestic hot water line heat exchanger and first, second and third interconnecting lines.
- Fig. 6: A sixth embodiment of the heating circuit according to the present invention showing same system as fig. 5 but including a second heat exchanger.
- Fig. 7: A first embodiment of the heating circuit according to the present invention including a thermal transfer unit connected to the domestic hot water line including a heat exchanger with an outlet connected to the heating outlet communication.
- Fig. 8: An eighth embodiment of the heating circuit according to the present invention as in fig. 3, but where the thermal transfer unit and heat exchanger connects differently.
- Fig. 9: A ninth embodiment of the heating circuit according to the present invention where the domestic return communication is directly connected to the reservoir,

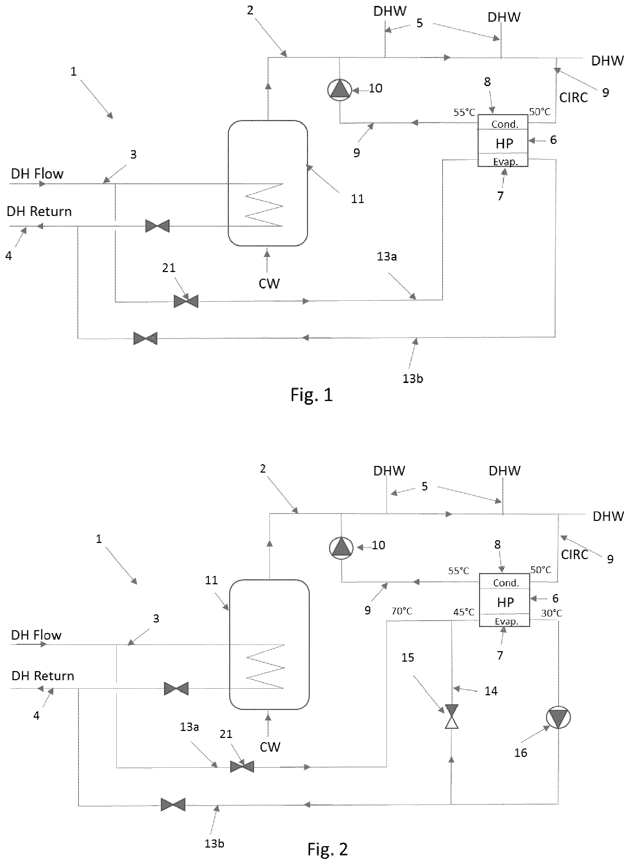

- Fig. 1: A tenth embodiment of the heating circuit according to the present invention where the thermal transfer unit is connected with its inlet connected to the reservoir.

### DETAILED DESCRIPTION OF THE INVENTION

It should be understood that the detailed description and specific examples, while indicating embodiments of the invention, are given by way of illustration only, since various changes and modifications within the spirit and scope of the invention will become apparent to those skilled in the art from the detailed description.

Figure 1 illustrate a first embodiment of the present invention with a heating system (1) including a domestic hot water line (2) for feeding water taps (5) with heated water. The heated water is extracted from a heating reservoir or heat exchanger (11), which is in thermal transfer exchange connection to a heating supply (3, 4) including a supply line (3) and return line (4), such as, but not limited to, a district heating network. In the following embodiments as illustrated and explained, a reservoir (11) is used as example, but in any of the embodiments this may instead be a heat exchanger (11). The heating reservoir/ heat exchanger (11) has a water inlet, typically cold water. In the embodiment with a reservoir (11), the water is introduced at the bottom, or the cold-water section, of the reservoir (11). Since heat moves upwards the reservoir typically has a gradual increasing temperature from the bottom towards the top, and in the following, without loss of generality, the reservoir (11) will be referred to as having a cold-water section, which typically is at the lower part, and a hot-water section, which typically is at the upper part. Typically, the cold water is introduced at the bottom at the coldest part, and the extraction to the domestic hot water line (2) at the top at the hottest part.

The heating supply (3, 4) usually is in thermal exchange connection to the cold-water section. Such as to the lower half of the reservoir (11).

The alternative embodiment, as previously described, is where a heat exchanger (11) is introduced instead of a reservoir (11). In this case the heat supply (3, 4) in the common manner is connected to the one path (usually referred to as primary side) of the heart exchanger, and the second path (usually referred to as secondary side) of the heat exchanger is connected to a cold-water supply. As the fluids are flowing heat is transferred from the hotter heating fluid entering the first path from the supply line (3) to the colder fluid flowing in the second path, which has the outlet connected to the domestic hot water line (2). As also indicated previously, this could apply in general to any of the embodiments by replacing a reservoir (11) with a heat exchanger (11).

A thermal transfer unit (6) is connected to the heating system (1) transferring thermal energy from a first fluid connection (7) to a second fluid connection (8) of the thermal transfer unit (6). The thermal transfer unit (6) is defined by being able of transfer thermal energy from a first fluid to a second fluid, the second fluid being hotter than the first, said thermal transfer unit (6) transferring thermal energy from a fluid in a first fluid connection (7) to a fluid in a second fluid connection (8) of the thermal transfer unit (6).

In some embodiment the temperature of the first connection (7) inlet is lower than the temperature of the second connection (8) inlet.

In some embodiments the temperature of the first connection (7) outlet is lower than the temperature of the second connection (8) outlet.

In some embodiments the temperature of the first connection (7) inlet is higher than the temperature of the second connection (8) inlet.

In some embodiments the temperature of the first connection (7) outlet is higher than the temperature of the second connection (8) outlet

The second fluid connection (8) is connected to the domestic hot water line (2). The thermal transfer unit (6) may be a heat pump in the usual sense.

In the illustrated embodiment, the second fluid connection (8) is connected to a domestic return communication (9) of the domestic hot water line (2), and the inlet is connected to a return part of said domestic hot water line (2) which downstream of at least the first, or possible the last, of the water taps (5). The second fluid connection (8) outlet is connected to a supply part of said domestic hot water line (2) being upstream of the first of the water taps (5) by a domestic return communication (9). Together this forms a flow circuit where thermal energy in the thermal transfer unit (6) is transferred to the water from the return part and then directed to the supply part.

In any of the figures, the indicated temperatures are just given for aiding the explanation of the system, and thus are not representative or limiting for actual temperatures.

In the illustration of fig. 1, the respective inlet and outlet temperatures of the second fluid connection (8) are exampled as respectively 50 °C and 55 °C, the un-tapped water thus being returned to the supply part of the domestic hot water line (2) after having its temperature raised in the thermal transfer unit (6).

The temperature in the supply line (3) could be any, such as being higher than the temperatures flowing in the domestic hot water line (2), e.g. 70 °C, but in alternative embodiments it's lower, and thus the temperatures in the hot section of the reservoir (11) is lower too.

In the illustrated embodiment, the heating inlet communication (13a) connects the supply line (3) to the first fluid connection (7) inlet of the thermal transfer unit (6), and the heating outlet communication (13b) its outlet to the return line (4).

To drive the flow in through the domestic return communication (9) and second fluid connection (8), a pumping unit (10) may connected to the domestic return communication (9), which may be either connected between the inlet connected to a return part or outlet connected to a supply part.

Figure 2 is basically the same heating system (1) as in figure 1, but where a first interconnecting line (14) connects the heating inlet communication (13a) and the heating outlet communication (13b). Acheck valve (15) and a pumping unit (16) is connected to circulate fluid from the outlet to the inlet of the first fluid connection (7) through the first interconnecting line (14). This enables a circulation of the fluid leaving the outlet, where a fraction of it can be mixed with the fluid in the heating inlet communication (13a) before entering the thermal transfer unit (6) first fluid connection (7) inlet, thereby securing a low inlet temperature to (7) and extracting an even higher fraction of thermal energy from it. An example temperature in the supply line (3) of 70 °C is supplied by the heating inlet communication (13a) at the mixing point, where it connects with the first interconnecting line (14), thus lowering the temperature being feed to the first fluid connection (7) inlet. As can be seen in the illustrated example, after mixing the temperature of the inlet of the first fluid connection (7) is 45 °C, where the fluid in the thermal transfer unit (6) is lowered to 30°C where a fraction may be feed back to the return line (4) through the heating outlet communication (13b), and a fraction being feed to the heating inlet communication (13a) through the first interconnecting line (14).

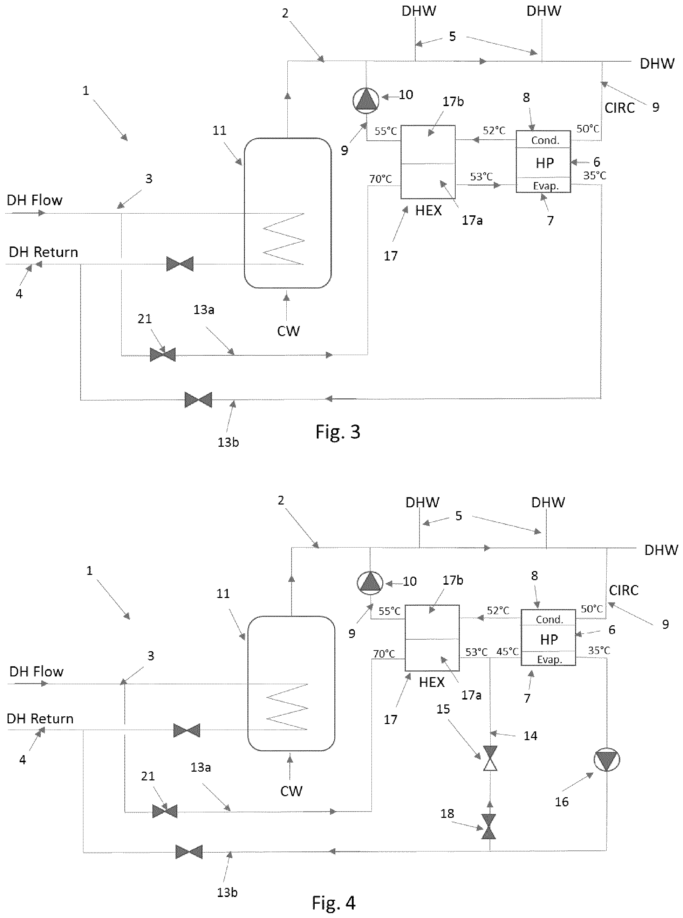

Figure 3 disclose an example where a heat exchanger (17) is positioned with a first path (17a) forming part of the heating inlet communication (13a), and a second path (17b) forming part of the domestic return communication (9), thus transferring thermal energy from the hotter to the colder of the respective fluids. By this embodiment the heat exchanger (17) transfers thermal energy from the fluid passing the first part (17a) to the fluid passing the second part (17b), which has a lower temperature than that of the first part (17a). The embodiment then utilizes the characteristic of respectively the thermal transfer unit (6) (e.g. heat pump) and heat exchanger (17), where the temperature entering from the heating inlet communication (13a) (e.g. being 70 °C) is lowered (e.g. to. 53 °C) by a thermal transfer to the fluid in the second part (17b) (e.g. increasing its temperature from 52 °C to 55°C), thus having a feeding temperature to the first connection (7) inlet of the thermal transfer unit (6) being close to the temperature entering its second connection (8) inlet (e.g. being 50 °C). The enables the thermal transfer unit (6) to be downsized or leading to a quite lowered outlet temperature of the first fluid connection (7) outlet (e.g. 35 °C).

Figure 4 shows a mix of the embodiments of figures 2 and 3, where the first interconnecting line (14) is connected to the heating inlet communication (13a) in the path between the heat exchanger (17) and the first connection (7) inlet. A further first flow controlling valve (18) may be positioned to control the flow rate in the circulating fluid from the first fluid connection (7) outlet to inlet through the first interconnecting line (14), and thus the fraction of flow respectively to circulate in the circuit in the first interconnecting line (14) and to be returned by the heating outlet communication (13b). Alternatively, the pump could be speed controlled and thus control the flow rate. A similar first flow controlling valve (18) also could be present in the embodiment of fig. 2 and other embodiments comprising a first interconnecting line (14).

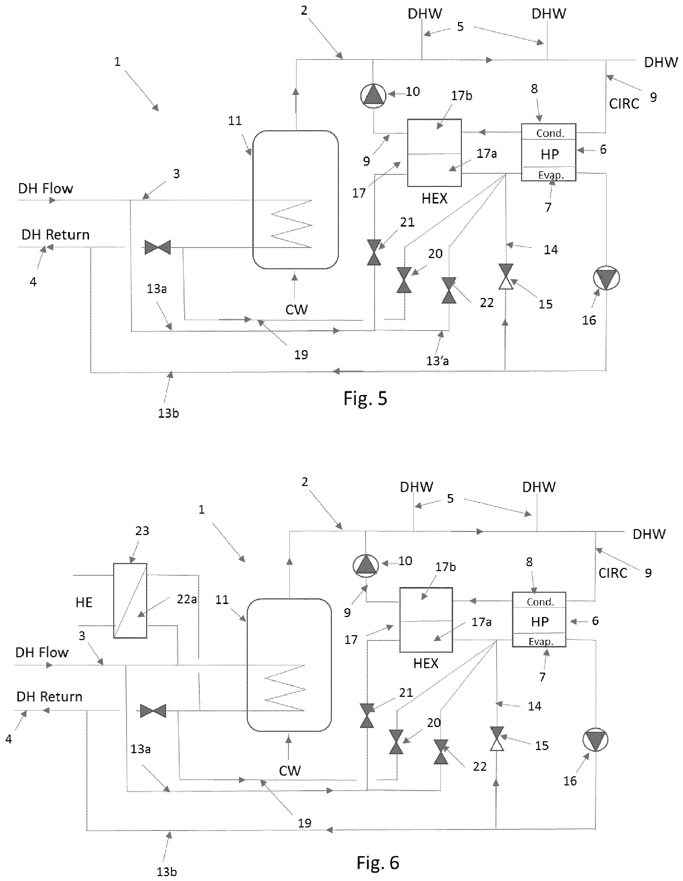

Fig. 5 disclose a related embodiment to that of fig. 4, but also including an additional second interconnecting line (19) connecting the return line (4) to the flow path between the heat exchanger (17) first path (17a) outlet and the thermal transfer unit (6) first flow connection (7) inlet, and where it optionally is equipped with a second flow controlling valve (20) to control the flow through the line. The figure further discloses a possible additional third interconnecting line (13'a), connecting the supply line (4) to the flow path between the heat exchanger (17) first path (17a) outlet and the thermal transfer unit (6) first flow connection (7) inlet. Alternative to direct connection to the supply line (3), it may be connected to the heating inlet communication (13a). The third interconnecting line (13'a) optionally is equipped with a third flow controlling valve (22). This enables a more precise control of the temperature of the mixed fluid entering the first fluid connection (7), in that there in addition is connection to the hot heating fluid in the supply line (3) and the cooled heating fluid in the return line (4), the respective flows being controlled by the second (20) and third (22) flow controlling valves. In this embodiment the energy possible could be delivered from the return line (4), such that even more of the remaining temperature in the line, corresponding to thermal energy, would be utilized for the heating purposes.

Fig. 6 shows a similar system to that of fig. 5, disclosing a second heat exchanger (23) having a first side (22a) connected to respectively the supply line (3) and return line (4) (or alternatively could have both connections to the return line (4), which is not illustrated). A similar second heat exchanger (23) could in the same manner be introduced in any of the other embodiments. In this manner the heat in the supply (3, 4) additionally to heating the reservoir (11), could be utilized for other heating purposes. In this embodiment, the energy possible could be delivered from the return line (4), such that even more of the remaining temperature in the line, corresponding to thermal energy, would be utilized for the other heating purposes.

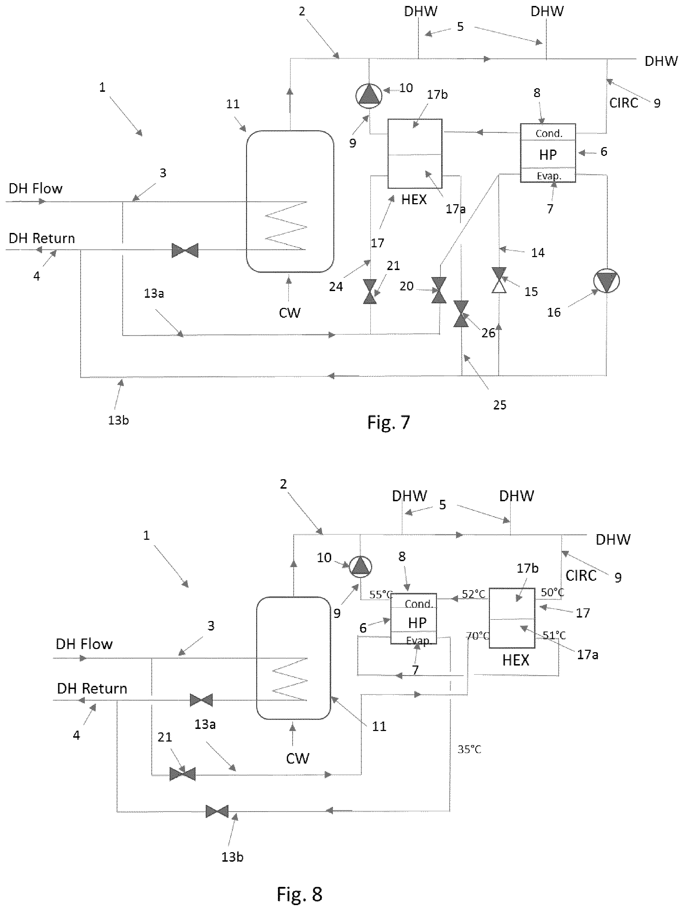

Fig. 7 shows another embodiment, where the heat exchanger (17) is not directly connected to the thermal transfer unit (6), but rather is positioned with a first path (17a) connected to the supply line (3) by a heat exchanger inlet line (24) and to the heating outlet communication (13b) through a heat exchanger outlet line (25), and where a second path (17b) of the heat exchanger (19) forms part of the domestic return communication (9), thus transferring thermal energy from the hotter to the colder of the respective fluids. In this manner the two devices (6, 17) operates independently to heat the fluid in the domestic return communication (9). This could also be combined with the embodiment of fig. 5 showing the third interconnecting line (21). In one related embodiment the two devices (6, 17) could swap position.

Fig. 8 shows an alternative embodiment, where a heat exchanger (17) is positioned with a first path (17a) forming part of the heating inlet communication (13a) and a second path (17b) forming part of the domestic return communication (9), thus transferring thermal energy from the hotter to the colder of the respective fluids, where the first connection (7) of said thermal transfer unit (6) includes an inlet connected to the outlet of the first path (17a), and an outlet connected to a return line (4) of the supply by a heating outlet communication (13b), and where the outlet of the second path (17b) is connected to the second fluid connection (8) inlet.

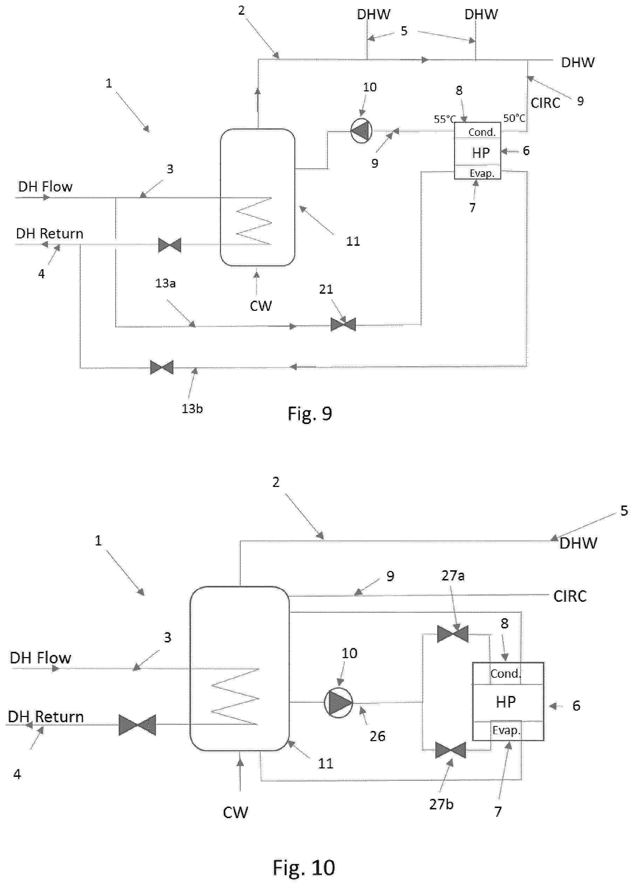

Fig. 9 shows a different embodiment, where the domestic return communication (9) rather than connecting to the domestic hot water line (2) directly, is connected to the hot section of the reservoir (11) . In this manner the re-heated return domestic water is not directly returned to the domestic heating line (2), but is mixed with the heated fluid in the reservoir (11). The connection usually will be at an upper part of the reservoir (11), such as in the upper half, or upper third or fourth. In the alternative embodiment where a heat exchanger (11), rather than a reservoir (11), is connected, the domestic return communication (9) then will be mixed with the entering cold water.

Fig. 10 shows an alternative version to the embodiment of fig. 9, where the heat transfer unit (6) is directly connected to the reservoir (11) by an extraction line (26) connected at a cold or mid-section of the reservoir (11). The extraction line (26) branches to connect to respectively the first connection (7) inlet and second fluid connection (8) inlet of said heat transfer unit (6). This induces a movement of thermal energy within the reservoir (11) by the thermal transfer unit (6) from the cold section to the hot section. The relative flows in the branches are controlled by valves (27a, 27b). In this embodiment the thermal stratification is supported, and lower return temperatures from the tank coil is obtained at (4)

## Claims

1. Heating system (1) including a domestic hot water line (2) in heat exchange connection to a supply line and a return line (3, 4) and where the domestic hot water line (2) feeds water taps (5) with heated water, whereas a heat pump (6) is connected to said domestic hot water line (2) transferring thermal energy from a fluid in a first fluid connection (7) to a fluid in a second fluid connection (8) of the heat pump (6), where said heat pump (6) is defined by being able of transfer thermal energy from a first fluid to a second fluid, the second fluid being hotter than the first where the temperature of the first connection (7) outlet is lower than the temperature of the second connection (8) outlet, where the second fluid connection (8) inlet is connected to a return line (9) of said domestic hot water line (2) downstream of at least the first of the water taps (5), and the second fluid connection (8) outlet is connected to a supply part of said domestic hot water line (2) being upstream of the first of the water taps (5), together forming a flow circuit where thermal energy in the heat pump (6) is transferred to the water from the return part and then directed to the supply part, and where the first connection (7) of heat pump (6) includes an inlet connected to a supply line (3) of the supply by a heating inlet communication (13a), and an outlet connected to a return line (4) of the supply by a heating outlet communication (13b).

2. Heating system (1) as in claim 1, wherein a pumping unit (10) is connected to the domestic return communication (9), which may be either connected between the inlet connected to a return part or outlet connected to a supply part.

3. Heating system (1) as in claim 2, wherein a reservoir or heat exchanger (11) is connected as water supply to the domestic heating line (2), this being heated by the supply (3, 4).

4. Heating system (1) as in claim 1, 2 or 3, wherein a first interconnecting line (14) connects the heating inlet communication (13a), and the heating outlet communication (13b), and where and check valve (15) and a pumping unit (16) is connected to circulate fluid from the first fluid communication (7) outlet to the first inlet through the first interconnecting line (14).

5. Heating system (1) as in any of the claims 1 to 4, where a heat exchanger (17) is positioned with a first path (17a) forming part of the heating inlet communication (13a) and a second path (17b) forming part of the domestic return communication (9), thus transferring thermal energy from the hotter to the colder of the respective fluids.

6. Heating system (1) as in claim 4 or 5, where the first interconnecting line (14) is connected to the heating inlet communication (13a) in the path between the heat exchanger (17) and the heat pump (6) first fluid communication (7) inlet.

7. Heating system (1) as in any of claims 4-6, where further a first flow controlling valve (18) is positioned to control the flow rate in the circulating fluid from the first fluid communication (7) outlet to inlet through the first interconnecting line (14).

8. Heating system (1) as in any of claims 5-7, wherein a second interconnecting line (19) connects the return line (9) to the flow path between the heat exchanger (17) and the heat pump (6) and optionally is equipped with a second flow controlling valve (20).

9. Heating system (1) as in any of the preceding claims, comprising a second heat exchanger (23), wherein second heat exchanger (23) having a first side (22a) connected to respectively the supply line (3) and return line (4) or to two positions of the return line (4).

10. Heating system (1) as in any of the claims 1 to 4, where a heat exchanger (17) is positioned with a first path (17a) connected to the supply line (3) by a heat exchanger inlet line (24) and to the heating outlet communication (13b) through a heat exchanger outlet line (25), and where a second path (17b) of the heat exchanger (17) forms part of the domestic return communication (9), thus transferring thermal energy from the hotter to the colder of the respective fluids.

11. Heating system (1) as in any of the claims 1-3, wherein a heat exchanger (17) is positioned with a first path (17a) forming part of the heating inlet communication (13a) and a second path (17b) forming part of the domestic return communication (9), thus transferring thermal energy from the hotter to the colder of the respective fluids, where the first connection (7) of said heat pump (6) includes an inlet connected to the outlet of the first path (17a) and a first connection (7) outlet connected to a return line (4) of the supply by a heating outlet communication (13b), and where the outlet of the second path (17b) is connected to the second connection (8) inlet.

12. Heating system (1) as in any of the preceding claims, where the temperature of the first connection (7) inlet is lower than the temperature of the second connection (8) inlet.

## Patentansprüche

1. Heizsystem (1), umfassend eine Brauchwarmwasserleitung (2) in Wärmeaustauschverbindung mit einer Versorgungsleitung und einer Rücklaufleitung (3, 4) und wobei die Brauchwarmwasserleitung (2) Wasserhähne (5) mit Warmwasser speist, wobei eine Wärmepumpe (6) mit der Brauchwarmwasserleitung (2) verbunden ist, die thermische Energie von einem Fluid in einer ersten Fluidverbindung (7) auf ein Fluid in einer zweiten Fluidverbindung (8) der Wärmepumpe (6) überträgt, wobei die Wärmepumpe (6) dadurch definiert ist, dass sie in der Lage ist, thermische Energie von einem ersten Fluid auf ein zweites Fluid zu übertragen, wobei das zweite Fluid wärmer als das erste ist, wobei die Temperatur eines Auslasses der ersten Verbindung (7) niedriger ist als die Temperatur eines Auslasses der zweiten Verbindung (8), wobei ein Einlass der zweiten Fluidverbindung (8) mit einer Rücklaufleitung (9) der Brauchwarmwasserleitung (2) stromabwärts von wenigstes dem ersten der Wasserhähne (5) verbunden ist, und der Auslass der zweiten Fluidverbindung (8) mit einem Versorgungsteil der Brauchwarmwasserleitung (2) verbunden ist, der stromaufwärts des ersten der Wasserhähne (5) ist, die zusammen einen Strömungskreis bilden, wobei thermische Energie in der Wärmepumpe (6) auf das Wasser von dem Rücklaufteil übertragen und anschließend zu dem Versorgungsteil geleitet wird, und wobei die erste Verbindung (7) der Wärmepumpe (6) einen Einlass, der mit einer Versorgungsleitung (3) der Versorgung durch einen Wärmeeinlassübertragungsweg (13a) verbunden ist, und einen Auslass, der mit einer Rücklaufleitung (4) der Versorgung durch einen Wärmeauslassübertragungsweg (13b) verbunden ist, umfasst.

2. Heizsystem (1) nach Anspruch 1, wobei eine Pumpeneinheit (10) mit dem Brauchwasserrücklaufübertragungsweg (9) verbunden ist, der entweder zwischen dem mit einem Rücklaufteil verbundenen Einlass oder dem mit einem Versorgungsteil verbundenen Auslass verbunden sein kann.

3. Heizsystem (1) nach Anspruch 2, wobei ein Behälter oder Wärmetauscher (11) als Wasserversorgung mit der Brauchwarmwasserleitung (2) verbunden ist, wobei dieser durch die Versorgung (3, 4) erwärmt wird.

4. Heizsystem (1) nach einem der Ansprüche 1, 2 oder 3, wobei eine erste Verbindungsleitung (14) den Wärmeeinlassübertragungsweg (13a) und den Wärmeauslassübertragungsweg (13b) verbindet, und wobei ein Rückschlagventil (15) und eine Pumpeneinheit (16) verbunden ist, um Fluid von dem Auslass des ersten Fluidübertragungsweges (7) zu dem ersten Einlass über die erste Verbindungsleitung (14) umzuwälzen.

5. Heizsystem (1) nach einem der Ansprüche 1 bis 4, wobei ein Wärmetauscher (17) mit einem ersten Weg (17a), der einen Teil des Wärmeeinlassübertragungsweges (13a) bildet, und einem zweiten Weg (17b), der einen Teil des Brauchwasserrücklaufübertragungsweges (9) bildet, angeordnet ist, wodurch thermische Energie von dem wärmeren zu dem kälteren der jeweiligen Fluide übertragen wird.

6. Heizsystem (1) nach Anspruch 4 oder 5, wobei die erste Verbindungsleitung (14) mit dem Wärmeeinlassübertragungsweg (13a) in dem Weg zwischen dem Wärmetauscher (17) und dem Einlass des ersten Fluidübertragungsweges (7) der Wärmepumpe (6) verbunden ist.

7. Heizsystem (1) nach einem der Ansprüche 4-6, wobei ferner ein erstes Durchflussregelventil (18) angeordnet ist, um die Durchflussrate in dem umwälzenden Fluid von dem Auslass des ersten Fluidübertragungsweges (7) zu dem Einlass durch die erste Verbindungsleitung (14) zu regeln.

8. Heizsystem (1) nach einem der Ansprüche 5-7, wobei eine zweite Verbindungsleitung (19) die Rücklaufleitung (9) mit dem Durchflussweg zwischen dem Wärmetauscher (17) und der Wärmepumpe (6) verbindet und optional mit einem zweiten Durchflussregelventil (20) ausgestattet ist.

9. Heizsystem (1) nach einem der vorhergehenden Ansprüche, umfassend einen zweiten Wärmetauscher (23), wobei der zweite Wärmetauscher (23) eine erste Seite (22a) aufweist, die mit der Versorgungsleitung (3) und der Rücklaufleitung (4) bzw. mit zwei Stellen der Rücklaufleitung (4) verbunden ist.

10. Heizsystem (1) nach einem der Ansprüche 1 bis 4, wobei ein Wärmetauscher (17) mit einem ersten Weg (17a) angeordnet ist, der mit der Versorgungsleitung (3) durch eine Wärmetauschereinlassleitung (24) und mit dem Wärmeauslassübertragungsweg (13b) durch eine Wärmetauscherauslassleitung (25) verbunden ist, und wobei ein zweiter Weg (17b) des Wärmetauschers (17) einen Teil des Brauchwasserrücklaufübertragungsweges (9) bildet, wodurch thermische Energie von dem wärmeren zu dem kälteren der jeweiligen Fluide übertragen wird.

11. Heizsystem (1) nach einem der Ansprüche 1-3, wobei ein Wärmetauscher (17) mit einem ersten Weg (17a), der einen Teil des Wärmeeinlassübertragungsweges (13a) bildet, und einem zweiten Weg (17b), der einen Teil des Brauchwasserrücklaufübertragungsweges (9) bildet, angeordnet ist, wodurch thermische Energie von dem wärmeren zu dem kälteren der jeweiligen Fluide übertragen wird, wobei die erste Verbindung (7) der Wärmepumpe (6) einen Einlass umfasst, der mit dem Auslass des ersten Wegs (17a) und einem Auslass einer ersten Verbindung (7) verbunden ist, der mit einer Rücklaufleitung (4) der Versorgung durch einen Wärmeauslassübertragungsweg (13b) verbunden ist, und wobei der Auslass des zweiten Wegs (17b) mit dem Einlass der zweiten Verbindung (8) verbunden ist.

12. Heizsystem (1) nach einem der vorhergehenden Ansprüche, wobei die Temperatur des Einlasses der ersten Verbindung (7) niedriger ist als die Temperatur des Einlasses der zweiten Verbindung (8).

## Revendications

1. Système de chauffage (1) comportant une conduite d'eau chaude domestique (2) en raccordement d'échange de chaleur avec une conduite d'alimentation et une conduite de retour (3, 4) et dans lequel la conduite d'eau chaude domestique (2) alimente des robinets d'eau (5) avec de l'eau chauffée, alors qu'une pompe à chaleur (6) est raccordée à ladite conduite d'eau chaude domestique (2), transférant de l'énergie thermique d'un fluide dans un premier raccordement de fluide (7) à un fluide dans un deuxième raccordement de fluide (8) de la pompe à chaleur (6), ladite pompe à chaleur (6) étant définie comme pouvant transférer de l'énergie thermique d'un premier fluide à un deuxième fluide, le deuxième fluide étant plus chaud que le premier, la température de la sortie du premier raccordement (7) étant inférieure à la température de la sortie du deuxième raccordement (8), l'entrée du deuxième raccordement de fluide (8) étant raccordée à une conduite de retour (9) de ladite conduite d'eau chaude domestique (2) en aval au moins du premier des robinets d'eau (5), et la sortie du deuxième raccordement de fluide (8) étant raccordée à une partie alimentation de ladite conduite d'eau chaude domestique (2) qui se situe en amont du premier des robinets d'eau (5), formant conjointement un circuit d'écoulement où de l'énergie thermique dans la pompe à chaleur (6) est transférée à l'eau depuis la partie retour et dirigée ensuite jusqu'à la partie alimentation, et le premier raccordement (7) de la pompe à chaleur (6) comportant une entrée raccordée à une conduite d'alimentation (3) de l'alimentation par une communication d'entrée de chauffage (13a), et une sortie raccordée à une conduite de retour (4) de l'alimentation par une communication de sortie de chauffage (13b).

2. Système de chauffage (1) selon la revendication 1, dans lequel une unité de pompage (10) est raccordée à la communication de retour domestique (9), qui peut être raccordée entre l'entrée raccordée à une partie retour ou la sortie raccordée à une partie alimentation.

3. Système de chauffage (1) selon la revendication 2, dans lequel un réservoir ou échangeur de chaleur (11) est raccordé en tant qu'alimentation en eau à la conduite de chauffage domestique (2), celui-ci étant chauffé par l'alimentation (3, 4).

4. Système de chauffage (1) selon la revendication 1, 2 ou 3, dans lequel une première conduite d'interconnexion (14) raccorde la communication d'entrée de chauffage (13a) et la communication de sortie de chauffage (13b) et dans lequel un clapet antiretour (15) et une unité de pompage (16) sont raccordés pour faire circuler un fluide de la sortie de la première communication de fluide (7) à la première entrée par la première conduite d'interconnexion (14).

5. Système de chauffage (1) selon l'une quelconque des revendications 1 à 4, dans lequel un échangeur de chaleur (17) est positionné avec un premier passage (17a) formant une partie de la communication d'entrée de chauffage (13a) et un deuxième passage (17b) formant une partie de la communication de retour domestique (9), transférant ainsi de l'énergie thermique du plus chaud au plus froid des fluides respectifs.

6. Système de chauffage (1) selon la revendication 4 ou 5, dans lequel la première conduite d'interconnexion (14) est raccordée à la communication d'entrée de chauffage (13a) sur le passage entre l'échangeur de chaleur (17) et l'entrée de la première communication de fluide (7) de la pompe à chaleur (6).

7. Système de chauffage (1) selon l'une quelconque des revendications 4 à 6 dans lequel, en outre, une première vanne de réglage du débit (18) est positionnée pour régler le débit du fluide circulant de la sortie de la première communication de fluide (7) à l'entrée de la première conduite d'interconnexion (14).

8. Système de chauffage (1) selon l'une quelconque des revendications 5 à 7, dans lequel une deuxième conduite d'interconnexion (19) raccorde la conduite de retour (9) au passage entre l'échangeur de chaleur (17) et la pompe à chaleur (6) et est éventuellement équipée d'une deuxième vanne de réglage du débit (20).

9. Système de chauffage (1) selon l'une quelconque des revendications précédentes, comprenant un deuxième échangeur de chaleur (23), le deuxième échangeur de chaleur (23) ayant un premier côté (22a) raccordé respectivement à la conduite d'alimentation (3) et la conduite de retour (4) ou à deux positions de la conduite de retour (4).

10. Système de chauffage (1) selon l'une quelconque des revendications 1 à 4, dans lequel un échangeur de chaleur (17) est positionné avec un premier passage (17a) raccordé à la conduite d'alimentation (3) par une conduite d'entrée d'échangeur de chaleur (24) et à la communication de sortie de chauffage (13b) par une conduite de sortie d'échangeur de chaleur (25), et dans lequel un deuxième passage (17b) de l'échangeur de chaleur (17) forme une partie de la communication de retour domestique (9), transférant ainsi de l'énergie thermique du plus chaud au plus froid des fluides respectifs.

11. Système de chauffage (1) selon l'une quelconque des revendications 1 à 3, dans lequel un échangeur de chaleur (17) est positionné avec un premier passage (17a) formant une partie de la communication d'entrée de chauffage (13a) et un deuxième passage (17b) formant une partie de la communication de retour domestique (9), transférant ainsi de l'énergie thermique du plus chaud au plus froid des fluides respectifs, dans lequel le premier raccordement (7) de ladite pompe à chaleur (6) comporte une entrée raccordée à la sortie du premier passage (17a) et une sortie du premier raccordement (7) raccordée à une conduite de retour (4) de l'alimentation par une communication de sortie de chauffage (13b), et dans lequel la sortie du deuxième passage (17b) est raccordée à l'entrée du deuxième raccordement (8).

12. Système de chauffage (1) selon l'une quelconque des revendications précédentes, dans lequel la température de l'entrée du premier raccordement (7) est inférieure à la température de l'entrée du deuxième raccordement (8) .
